# EUROPÄISCHE PATENTSCHRIFT

(11) **EP 2 637 821 B1**
(45) Veröffentlichungstag und Bekanntmachung des Hinweises auf die Patenterteilung: **16.09.2015**
(21) Anmeldenummer: 11787785.2
(22) Anmeldetag: 05.11.2011
(51) Int. Cl.: B23Q 11/00, G05B 19/404, B23Q 1/34

(54) **EINRICHTUNG ZUR LAGEKORREKTUR VON ELEMENTEN EINER WERKZEUGMASCHINE**
DEVICE FOR CORRECTING THE POSITION OF ELEMENTS OF A MACHINE TOOL
DISPOSITIF DE CORRECTION DE POSITION D'ÉLÉMENTS D'UNE MACHINE-OUTIL

(30) Priorität: 08.11.2010 DE 202010008979 U
(43) Veröffentlichungstag der Anmeldung: 18.09.2013
(73) Patentinhaber: Starrag AG, 9404 Rorschacherberg (CH)
(72) Erfinder: HAGSPIEL, Walter, 9404 Goldach (CH)
(74) Vertreter: Rumrich, Gabriele
(86) Internationale Anmeldenummer: PCT/EP2011/005579
(87) Internationale Veröffentlichungsnummer: WO 2012/062438

(56) Entgegenhaltungen:
- WO-A1-99/08330
- WO-A1-03/033933
- WO-A1-03/049897
- DE-U1- 9 422 389
- JP-A- 2007 216 319
- US-A- 4 958 100

## Beschreibung

Die Erfindung betrifft eine Werkzeugmaschine mit einer Einrichtung zur Lagekorrektur von Elementen der Werkzeugmaschine. Bei Werkzeugmaschinen, insbesondere mit einer offenen Gestellstruktur (C-Form), entstehen durch unterschiedliche Temperaturverteilungen in den Baugruppen Neigungsveränderungen zwischen der Werkzeug- und der Werkstückseite. Insbesondere bei mehrspindligen Maschinen, mit welchen mehrere identische Werkstücke gleichzeitig bearbeitet werden sollen, ergeben sich infolge dieser Neigungsveränderung unterschiedliche Abmessungen der einzelnen Werkstücke, z. B. unterschiedliche Dicken, je nach Anordnung der Bearbeitungsspindeln und der Werkstücke. Die Maßdifferenzen zwischen den einzelnen Werkstücken können die vorgegebenen Toleranzen überschreiten und zu Ausschuss führen.

Es ist bekannt, diese Neigungsveränderungen durch Kühlsysteme einzuschränken und die an den Hauptwärmequellen entstehende Wärme abzuführen. Mit vertretbarem Aufwand kann die entstehende Wärme jedoch nie vollständig über ein Kühlsystem abgeleitet werden.

Die prinzipielle Idee, Verlagerungen an Werkzeugmaschinen, die beispielsweise durch Temperatureinflüsse hervorgerufen werden, zu erfassen und über druckbeaufschlagte Verformungselemente geregelt auszugleichen, ist bereits aus der Druckschrift DE 1 946 857 A bekannt, in welcher ein Verfahren und eine Einrichtung zur Kontrolle und Korrektur von mechanischen Verschiebungen, insbesondere bei Werkzeugmaschinen, beschrieben wird. Dazu werden an einer oder mehreren Stellen der Maschine ein oder mehrere Verformungselemente angeordnet. Die Deformationen der Werkzeugmaschine werden in Analogie, ausgehend von einem separaten Detektor-Verformungselement, ermittelt, welches auch außerhalb der Maschine angeordnet sein kann. Zwischen dem Verformungselement und dem Detektorelement sind Mittel zur Kontrolle und Regelung vorgesehen. Durch Ausdehnung oder Zusammenziehen der Verformungselemente werden Verlagerungen korrigiert. Diese Lösung ist relativ aufwendig und ein entscheidender Nachteil besteht darin, dass die Verformungselemente konstruktiv sehr instabil ausgebildet sind, so dass die für eine hochgenaue Fertigung erforderliche Stabilität einer Werkzeugmaschine nicht gewährleistet ist.

In der Druckschrift DE 10 2004 007 042 A1 wird eine Einrichtung zur Lagekorrektur von Baugruppen an Werkzeugmaschinen mit Spindelkasten und verfahrbarem Längsschlitten zum Ausgleich von Verlagerungen, die durch Temperaturänderungen oder statische Kräfte hervorgerufen werden, beschrieben. Dazu wird das Drehspindelgehäuse unterhalb der Spindellagerung im mittleren Bereich des Gehäuses getrennt und diese Trennstelle durch eine Verstelleinrichtung (Aktor) wieder geschlossen, wobei der Aktor durch einen Antrieb betätigbar ist. Die Trennung wird vorzugsweise an dem an der Vorderseite links des Gehäuses befindlichen Querschnittsübergang vorgenommen. An dem durchtrennten Steg wird die erforderliche Spreizkraft von einem mechanisch programmierbaren Aktor übertragen. Um am Spindelflansch die gewünschte Neigungskorrektur gezielt einstellen zu können, wird das maschinenspezifische Temperaturverhalten über die Steuerung ausgewertet und danach über den programmierbaren Aktor die entsprechende Spreizkraft zur Veränderung aufgebracht. Der Aktor wird dabei über eine Gewindespindel mit zwei unterschiedlichen Steigungen zur Erzeugung der Spreizlast verformt und dadurch die Arbeitsspindel geneigt. Die Gewindespindel wird dazu von einer Antriebseinheit um den erforderlichen Stellbetrag bewegt. Als Antriebseinheit dient ein Positionierantrieb, bestehend aus Gleichstrommotor mit Absolutwertgeber, integrierter Regelungs- und Leistungselektronik und vorgesetztem Differenzzahngetriebe. Diese Einheit ist auf einem Motorlager befestigt. In Abhängigkeit von der Temperatur, die von einem Sensor aufgenommen wird, erfolgt über die Maschinensteuerung die Ansteuerung des Positionierantriebes, der über den Aktor die entsprechende Spreizkraft zur Veränderung der Neigung des Spindelgehäuses erzeugt. Damit wird die Neigung der Drehspindel um den erforderlichen Betrag korrigiert. Der Aktor ist dabei nicht sehr kompakt ausgeführt, so dass dies nachteilig für die Stabilität ist. Weiterhin erfolgt die Neigungsverstellung der Arbeitsspindel ausschließlich in Abhängigkeit von der gemessenen Temperatur. Eventuelle unerwünschte Lageveränderungen, die ggf. aufgrund anderer Einflüsse auftreten können, werden nicht erfasst.

Das Hauptproblem des Einsatzes der vorgenannten Lösungen stellt weiterhin der Steifigkeitsverlust im Freiheitsgrad, in dem die Kompensation wirkt, wie auch in den anderen räumlichen Freiheitsgraden dar. In allen Fällen wird somit durch die Einrichtung zur Lagekorrektur eine Art "schwimmende Lagerung" bei verringerter Steifigkeit realisiert, wodurch die Fertigungsgenauigkeit trotz der durchgeführten Lage- bzw. Neigungskompensation negativ beeinflusst wird.

Eine Vorrichtung zur Korrektur der Verlagerung eines translatorisch bewegbaren Teils, z.B. eines Schlittens, eines Schiebers, einer Traghülse oder dergleichen, an einer spanenden Werkzeugmaschine ist aus der Druckschrift DE 34 23 495 C2 bekannt. Die Werkzeugmaschine weist einen senkrechten Ständer, einen längs des Ständers verschiebbaren Spindelkasten und den vom Spindelkasten gleitend getragenen, bewegbaren Teil auf, an dem ein Werkzeug oder eine Zusatzeinrichtung befestigbar ist. Bei dieser Lösung sind folgende Komponenten vorgesehen:
- eine mit einem Druckmittel beaufschlagte Einrichtung zum Aufbringen einer Korrekturkraft zur Korrektur der durch die Verlagerung des bewegbaren Teils verursachten Auswirkung,
- eine Positionserfassungseinrichtung zum Erfassen der Position des bewegbaren Teils,
- eine Einrichtung zum Erzeugen eines von der erfassten Position des bewegbaren Teils abhängigen Verlagerungskorrekturwertes und
- ein in Abhängigkeit vom Verlagerungskorrekturwert betätigtes Ventil zum Einstellen des Drucks des Druckmittels,
wobei die Einrichtung zum Aufbringen einer Korrekturkraft eine Kompensationseinrichtung zur Korrektur einer Neigung des bewegbaren Teils enthält und die Positionserfassungseinrichtung ein Positionssignal erzeugt, und wobei die Einrichtung zum Erzeugen eines Verlagerungskorrekturwerts eine Berechnungseinrichtung ist, die ein Verlagerungskorrektursignal erzeugt. Das Ventil ist durch das Verlagerungskorrektursignal elektromagnetisch betätigbar und die Einrichtung zum Aufbringen einer Korrekturkraft enthält eine Kompensationseinrichtung zur Korrektur einer Durchbiegung des bewegbaren Teils, eine Kompensationseinrichtung zur Korrektur einer durch eine Verschiebung der Schwerpunktlage des Spindelkastens verursachten Neigung des Spindelkastens und eine Kompensationseinrichtung zur Korrektur einer elastischen Deformation des vorderen unteren Abschnitts des Spindelkastens. Eine mit dem Positionssignal gespeiste Berechnungseinrichtung nimmt eine automatische Berücksichtigung der am bewegbaren Teil auftretenden Belastungsänderungen vor und sorgt für einen optimalen Funktionszusammenhang zwischen der durch das Positionssignal dargestellten Verschiebeposition des bewegbaren Werkzeugmaschinenteils und den Verlagerungskorrekturwerten für die einzelnen Kompensationseinrichtungen. Auf diese Weise soll auch bei Werkzeugmaschinen mit großen Abmessungen und hohem Gewicht unter Verwendung relativ einfacher steuerungstechnischer Mittel, die durch Verlagerung des bewegbaren Werkzeugmaschinenteils verursachte Auswirkung korrigiert werden. Diese Lösung ist relativ kompliziert gestaltet und es ist sehr aufwändig, die Durchbiegung des bewegten Teiles, hier der axial verschiebbaren Spindel, zu kompensieren.

Die in der Druckschrift WO 03/049897 beschriebene Werkzeugmaschine besitzt ein oder mehrere Bearbeitungsköpfe für die horizontale Bearbeitung von Werkstücken. Dabei wird der Bearbeitungskopf über ein Koppelgetriebe mit 2 Koppeln und einer Lagerstelle in waagrechter Position gehalten. Dabei soll deren Bearbeitungskopf in Bezug zu dem Werkstück, das er bearbeitet, durch Wechselwirkung der augenblicklichen Bewegungen des Bearbeitungskopfes infolge axialer Belastungen konstant mit Bewegungen gleicher Größenordnung jedoch in entgegen gesetzter Richtung festgehalten werden, sobald diese axialen Belastungen auftreten. Diese Bewegungen werden an den Bearbeitungskopf durch eine magnetostriktive Stange übermittelt, deren Länge von einem Augenblick zum nächsten durch Steuerung der ihre Magnetostriktion bewirkenden Ströme verändert wird. Es werden somit horizontale Bewegungen des Fundamentes ausgeglichen durch entgegen gerichtete axiale Bewegungen des Bearbeitungskopfes, der durch das Koppelgetriebe immer in waagerechter Position gehalten wird. Dieses System weist eine ungenügende Steifigkeit auf. Weiterhin ist es damit nicht möglich, eine veränderte Neigung der Bearbeitungsebenen auszugleichen.

In der Druckschrift DE 94 22 389 U1 wird eine Werkzeugschneiden-Verstelleinrichtung beschrieben, die zum hochgenauen spanenden Bearbeiten runder, unrunder beliebiger Funktion mit drehendem oder stehendem Werkzeug dienen soll und die frei programmierbar ist und eine absolut spielfreie Werkzeugschneidenverstellung ermöglicht, bei hoher Auslenkungsfrequenz. Dafür werden ein Festkörpergelenk und ein piezoelektrisches Element verwendet, jedoch wird das Gelenk durch die auftretenden Druckkräfte ausgelenkt und bei Wegnahme der Kräfte mittels einer Vorspannung in die ursprüngliche Ausgangslage zurückgeführt. Dabei wird nur das Werkzeug ausgelenkt. Es wird keine genaue Parallelität des Werkstückes zur Werkzeugschneide bzw. derer beiden Bearbeitungsebenen kontrolliert. Eventuelle Verformungen der Werkzeugaufnahme oder Werkstückaufnahme sind nicht ausgleichbar.

Der in der Druckschrift WO99/08330 beschriebene Stand der Technik betrifft einen piezoelektrischen Aktor, der in ein Einspritzventil eingebaut wird. Es ist aus dem Stand der Technik nicht bekannt, ein derartiges Kompensationselement zur Lagekorrektur an einer Werkzeugmaschine zu verwenden.

Aufgabe der Erfindung ist es, eine Werkzeugmaschine mit einer einfachen Einrichtung zur Lagekorrektur von Elementen einer Werkzeugmaschine, insbesondere einer Fräsmaschine, zu schaffen, die eine hohe Steifigkeit der Maschine gewährleistet.

Diese Aufgabe wird durch die kennzeichnenden Merkmale des ersten Patentanspruchs gelöst.

Vorteilhafte Ausgestaltungen ergeben sich aus den Unteransprüchen.

Bei der erfindungsgemäßen Werkzeugmaschine mit Einrichtung zur Lagekorrektur von wenigstens einem Element einer Werkzeugmaschine, insbesondere einer Fräsmaschine wird zwischen einem Maschinenelement und dem hinsichtlich seiner Lage zu korrigierenden Element wenigstens ein Kompensationselement angeordnet, welches um einen Stellweg verstellbar und durch Betätigung des Kompensationselementes um den Stellweg um eine Schwenkachse schwenkbar ist und wobei das Maschinenelement und das in seiner Lage zu korrigierende Element miteinander durch ein die Schwenkbewegung um die Schwenkachse gewährleistendes Gelenk gekoppelt sind, wobei das bzw. die am ersten Strukturteil angeordneten Werkzeuge zueinander insbesondere in einer zur Spindelachse um 90° geneigten Werkzeug-Spannebene und das bzw. die Werkstücke in einer Werkstück-Spannebene ausgerichtet sind und wobei die Werkzeug-Spannebene und die Werkstück-Spannebene im Wesentlichen zueinander parallel ausgerichtet sind, und dass bei einer über eine vorgegebene Toleranz auftretende Neigung zwischen Werkzeug-Spannebene und Werkstück-Spannebene diese durch eine Korrektur der Neigung des ersten Strukturteils oder eines Bereiches des ersten Strukturteiles und/oder eine Korrektur der Neigung des zweiten Strukturteils oder eines Bereiches des zweiten Strukturteils ausgeglichen wird.

Dadurch, dass das in seiner Lage verstellbare Element über das Kompensationselement betätigt und durch das Gelenk schwenkbar und stabilisiert ist, wird die Steifigkeit der Maschine nur unwesentlich bei der Verstellung der Neigung beeinträchtigt.

Ist die Werkzeugmaschine in Form einer Fräsmaschine mit einer insbesondere offenen C-förmigen Gestellstruktur, ausgebildet
- mit einem ersten Strukturteil, dem wenigstens eine Arbeitsspindel mit einer Spindelachse und ein um die Spindelachse antreibbares Werkzeug zugeordnet ist und
- mit mindestens einem zweiten Strukturteil , dem wenigstens eine Spannvorrichtung für wenigstens ein Werkstück zugeordnet ist,
ist die Neigung zwischen dem ersten und zweiten Strukturteil dadurch veränderbar, dass das erste und/oder zweite Strukturteil das in seiner Lage veränderbare Element bildet/n oder aufweist/aufweisen und mittels eines oder mehrerer Kompensationselemente durch die um die Schwenkachse induzierte Schwenkbewegung in ihrer Neigung relativ zueinander veränderbar ist/sind.

Bevorzugt ist das hinsichtlich seiner Neigung verstellbare Element als ein erster Teil des zweiten Strukturteils ausgebildet, an dem sich die Spannvorrichtung für das Werkstück befindet, wobei ein zweiter Teil des zweiten Strukturteils das Maschinenelement bildet und der erste Teil und der zweite Teil des zweiten Strukturteils durch das Gelenk miteinander schwenkbar verbunden sind und zwischen dem ersten Teil und dem zweiten Teil des zweiten Strukturteils mehrere Kompensationselemente angeordnet sind. Dadurch, dass das Schwenken des Strukturteiles der Werkzeugmaschine erfolgt, an welchem die Werkzeugspannung angeordnet ist, ist eine Wesentlich einfachere Neigungskompensation möglich, als bei einer Neigungsverstellung des Maschinenelementes, an welchem sich der Spindelkasten mit der gesamten Antriebstechnik der Werkzeuge befindet.

Das Gelenk ist dabei vorteilhafter Weise an der in Richtung zum ersten Strukturteil angeordneten Seite des zweiten Strukturteils angeordnet und als spielfreies, insbesondere aus Flachstahl bestehendes, Festkörpergelenk ausgebildet ist und an dem ersten Teil und dem zweiten Teil des zweiten Strukturteils befestigt. An der dem Gelenk gegenüberliegenden Seite des zweiten Strukturteils sind mehrere Kompensationselemente nebeneinander zwischen dessen ersten Teil und zweiten Teil angeordnet sind, wobei bevorzugt jeweils zwei Kompensationselemente paarweise Anwendung finden und voneinander beabstandet zwei Kompensationselemente oder zwei Paare von Kompensationselementen zwischen dem ersten Teil und dem zweiten Teil des zweiten Strukturteils angeordnet sind und wobei die Trennung zwischen dem ersten Teil und dem zweiten Teil des zweiten Strukturteils im Wesentlichen horizontal ausgerichtet ist.

Eine einfache und praktikable Möglichkeit zur Bestimmung der Neigung bzw. Neigungsveränderung zwischen den beiden Ebenen besteht darin, dass dies mit einem maschineninternen Messsystem bestimmbar ist und dass aus dem/den ermittelten Messwert/en die Stellgröße für den Stellweg der Kompensationselemente errechnet wird.

Zur gleichzeitigen Bearbeitung insbesondere baugleicher Werkstücke, die am zweiten Strukturteil gespannt sind, weist das erste Strukturteil eine entsprechende Anzahl von Arbeitsspindeln auf. Für die Bearbeitung von beispielsweise zwei übereinander angeordneten Werkstücken mit zwei übereinander angeordneten Werkzeugen ist dabei die Neigungskompensation von besonderer Bedeutung, da bei einer zu großen Neigung zwischen der Werkstückspannebene und der Werkzeugspannebene das Bearbeitungsergebnis der Werkstücke unerwünscht so voneinander abweichen kann, dass Ausschuss entsteht.

Ein Kompensationselement, welches zur Lagekorrektur von wenigstens einem Element einer Werkzeugmaschine, insbesondere einer Fräsmaschine Anwendung findet, ist um einen Stellweg stellbare und wird zwischen einem Maschinenelement und dem hinsichtlich seiner Lage zu korrigierenden Element angeordnet und weist einen im Wesentlichen rohrförmigen Dehnungskörper mit einer dünnen Wand und einer in Richtung zum Stellweg ausgerichteten Längsachse auf, wobei innerhalb des Dehnungskörpers ein Stützkörper angeordnet ist und zwischen dem Stützkörper und dem Dehnungskörper ein Druckraum ausgebildet ist, derart, dass bei einer im Druckraum des Dehnungskörper wirkenden und sich verändernden Druckkraft die dünne Wand des Dehnungskörpers in Stellrichtung um den Stellweges in ihrer Länge verändert und dadurch das Element in seiner Lage/Neigung verstellt wird. Durch die Anordnung eines Stützkörpers in dem Dehnungskörper wird neben der axialen Verstellbarkeit eine hohe Stabilität und Steifigkeit des Kompensationselementes gewährleistet und damit bei dessen Anwendung die Steifigkeit der Werkzeugmaschine nur unwesentlich beeinträchtigt, was für ein gutes Bearbeitungsergebnis, insbesondere bei hohen geforderten Genauigkeiten eine Wesentliche Voraussetzung ist.

Bevorzugt sind der Dehnungskörper und der Stützkörper an einem ersten Ende des Kompensationselementes miteinander verbunden und an dem anderen zweiten Ende des Kompensationselementes ist zwischen der Außenkontur des Stützkörpers und der Innenkontur des Dehnungskörpers der Druckraum ausgebildet ist.

Dazu weisen der Stützkörper und der Dehnungskörper an dem zweiten Ende des Kompensationselementes jeweils einen Boden auf, wobei zwischen den Böden der Druckraum ausgebildet ist, so dass sich bei einer im Druckraum gegen beide Böden wirkende und sich verändernde Kraft die Gesamthöhe des Kompensationselementes ändert.

Die im Druckraum wirkende und die Stellbewegung erzeugende Kraft kann dabei wahlweise durch die Druckbeaufschlagung des Druckraums, welcher durch eine Dichtung abgedichtet ist und eine Druckmittelzuführung aufweist, mittels eines Druckmediums oder durch ein im Druckraum angeordnetes bei Anlegen einer Spannung höhenverstellbares piezoelektrisches Element oder durch ein im Druckraum angeordnetes mechanisch höhenverstellbares Element induziert werden.

Mit der erfindungsgemäßen Lösung wird eine äußerst einfache und praktikable Lösung zur Verstellung der Neigung eines Maschinenelementes geschaffen, mit welchem die Stabilität der Maschine nicht oder nur unwesentlich beeinträchtigt wird.
Die Erfindung wird nachfolgend anhand eines Ausführungsbeispiels und zugehöriger Zeichnungen näher erläutert.

Es zeigen:
- Figur 1: eine Prinzipdarstellung einer zweispindligen Fräsmaschine zur gleichzeitigen Bearbeitung von zwei Werkstücken in der Seitenansicht,
- Figur 2: die Darstellung der Rückansicht,
- Figur 3: den Längsschnitt eines Kompensationselementes.

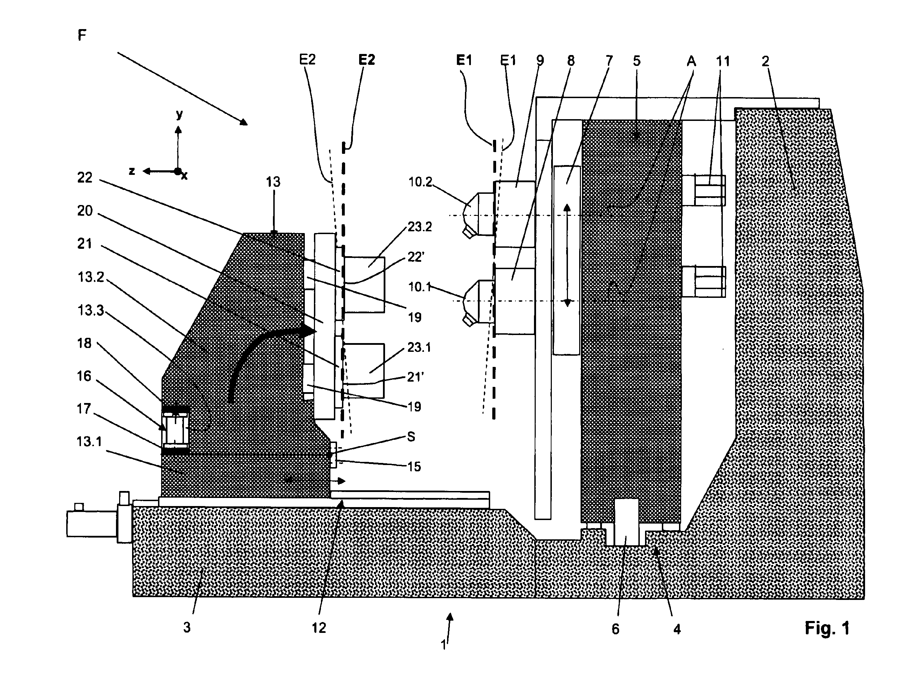

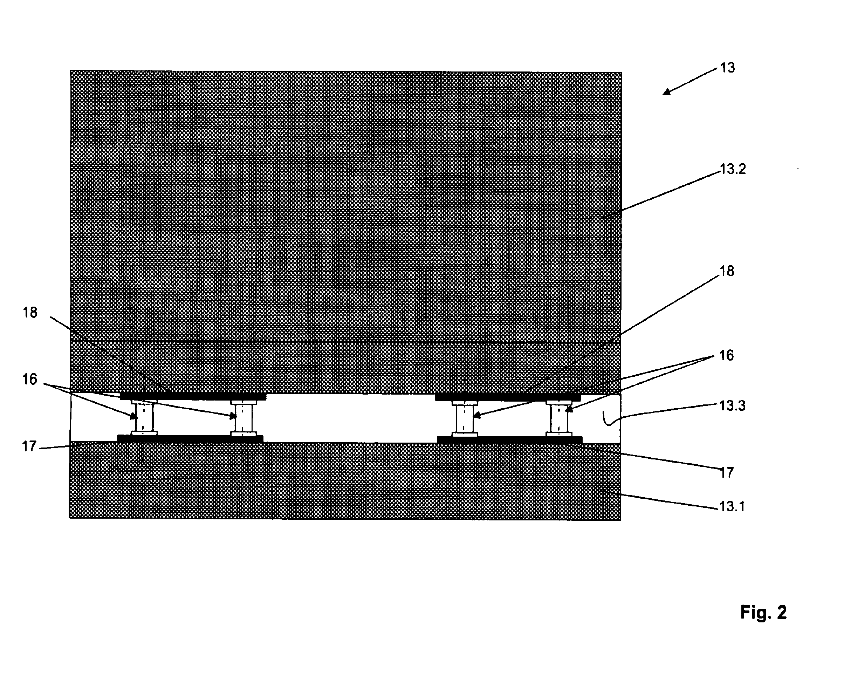

Gemäß Figur 1 weist die Fräsmaschine F einen im Wesentlichen C-förmigen nach oben geöffneten Aufbau auf. Das Maschinenbett 1 besitzt ein sich im Wesentlichen vertikal erstreckendes X-Bett 2 und ein sich im Wesentlichen horizontal erstreckendes Z-Bett 3. Das X-Bett 2 weist einen an das Z-Bett 3 angrenzenden Führungsbereich 4 auf, an dem ein sich vertikal erstreckendes erstes Strukturteil 5 in Form eines X-Schlittens mittels eines ersten Antriebes 6 in X-Richtung verfahrbar gelagert ist. An dem X-Schlitten/erstem Strukturteil 5 ist ein über nicht dargestellte Führungen in Y-Richtung höhenverstellbarer Spindelkasten 7 mit zwei übereinander angeordneten Arbeitsspindeln 8, 9 befestigt. Jede Arbeitsspindel 8, 9 weist ein Werkzeug 10 in Form eines Fräskopfes auf und ist mittels eines Antriebes 11 rotatorisch antreibbar. Die Spindelachsen A der beiden Arbeitsspindeln 8, 9 erstrecken sich in Z-Richtung und sind zueinander fluchtend übereinander angeordnet. Die Werkzeuge 10 sind dabei so ausgerichtet, dass diese in einer gemeinsamen Werkzeug-Aufspannebene E1 (fett gestrichelt) liegen, die sich vertikal in Y-Richtung erstreckt. Auf dem Z-Bett 3 ist mittels einer Führung 12 ein zweites Strukturteil 13 in Form eines Z-Schlittens in Z-Richtung verstellbar gelagert, dessen Rückansicht auch in Figur 2 dargestellt wird. Das zweite Strukturteil 13 weist eine horizontale Teilung 14 auf, so dass dieses in ein unteres erstes Teil 13.1 und ein darüber liegendes zweites Teil 13.2 unterteilt ist. Das erste Teil 13.1 und das zweite Teil 13.2 sind an ihren in Richtung zum ersten Strukturteil 5 weisenden Seiten (nicht bezeichnet) über ein Festkörpergelenk 15 miteinander verbunden (in Figur 2 nicht sichtbar), wobei das Festkörpergelenk 15 in Form eines Flachstahls ausgebildet ist. An der dem Festkörpergelenk gegenüberliegenden Seite besitzt das zweite Strukturteil 13 zwischen dessen erstem Teil 13.1 und zweiten Teil 13.2 insgesamt vier Kompensationselemente 16, die jeweils paarweise in einer Reihe angeordnet sind (siehe auch Figur 2). Die Kompensationselemente 16 sitzen in einer in Richtung zum ersten Teil 13.1 offenen Ausnehmung 13.3 des zweiten Teils 13.2. Jeweils zwei Kompensationselemente 16 sind an ihrer Unterseite über zwei untere Druckplatten 17 mit dem ersten Teil 13.1 und an ihrer Oberseite über zwei obere Druckplatten 18 mit dem zweiten Teil 13.2 verbunden. An dem zweiten Strukturteil 13 (Z-Schlitten) sind Aufnahmen 19 für die Befestigung einer Spannvorrichtung, hier einer Aufspannplatte 20 angeordnet. Mittels fluchtend vertikal übereinander angeordneter Aufspannvorrichtungen 21, 22 werden ein erstes Werkstück 23.1 und ein zweites Werkstück 23.2 gespannt. Die Werkstück-Aufspannebene E2 (fett gestrichelt), die unter anderem durch die sich vertikal erstreckenden Spannflächen 21' und 22' der Aufspannvorrichtungen 21, 22 definiert wird, sollte zur Gewährleistung einer qualitativ hochwertigen Bearbeitung parallel zur Werkzeug-Aufspannebene ausgerichtet sein. Beispielsweise Temperatureinflüsse können jedoch dazu führen, dass sich die Werkzeug-Spannebene E1 und/oder die Werkstück-Spannebene E2 (wie dünn gestrichelt in Figur 1 angedeutet) zueinander neigen, wodurch die qualitätsgerechte Fertigung von Werkstücken mit gleichen Abmessungen nicht mehr gewährleistet würde.
Durch ein nicht dargestelltes maschineninternes Messsystem werden Abweichungen von einer Sollausrichtung der Maschinengestellstruktur erfasst. Bei Überschreitung vorgegebener Sollwerte wird gemäß des Ausführungsbeispiels mittels der Steuerung der Maschine ein Signal zum Auslösen einer Stellbewegung der Kompensationselemente 16 ausgegeben und die Kompensationselemente 16 werden um einen Stellweg verstellt und dadurch das zweite Teil 13.2 des zweiten Strukturteils 13 um eine Schwenkachse S im Bereich des Gelenkes 15 geschwenkt/geneigt, so dass sich hier die Lage der Werkstück-Spannebene E2 wieder in einen Sollbereich verschiebt. Bevorzugt erfolgt mittels des maschineninternen Messsystems die Messung an den sich vertikal erstreckenden Spannflächen 21' und 22' der Aufspannvorrichtungen 21, 22. Es ist ebenfalls möglich, eine Temperaturmessung durchzuführen bzw. auch unterschiedliche Messverfahren miteinander zu kombinieren und daraus den erforderlichen Stellweg der Kompensationselemente zu errechnen. Je nach erforderlicher Nachstellung führen die Kompensationselemente eine Hub- oder eine Senkbewegung durch. In dem in Figur 1 dargestellten Ausführungsbeispiel muss eine Hubbewegung erfolgen, um aus einer sich außerhalb der Toleranz befindlichen Neigung der Werkstück-Spannebene E2, die dünn gestrichelt dargestellt ist, wieder die geforderte dick gestrichelte Werkstück-Spannebene E2 einzustellen.
Hat sich die Ebene E1 in ihrer Neigung auch verändert, wird die verstellbare Ebene E2 zur Ebene E1 parallel gerichtet. Gleichzeitig wird durch eine Verschiebung des Z-Schlittens 13 -über die CNC Steuerung- der Z-Nullpunkt wieder neu angepasst.
Entsprechend der geometrischen Anordnung der Werkstücke und der Kompensationselemente 16 zum Drehpunkt S wird über die Bewegung des Vertikalschlittens 7 die Y-Position via CNC-Steuerung kompensiert.
Durch die Verwendung insbesondere mehrerer Kompensationselemente in Kombination mit wenigstens einem Festkörpergelenk wird eine hohe Steifigkeit der Werkzeugmaschine gewährleistet.

Dabei sind das/die Festkörpergelenke in dem oder den Freiheitsgraden in denen die gewünschte Kompensationsbewegung erfolgen soll, nachgiebig ausgebildet, während sie in den anderen 5 Freiheitsgraden über eine hohe Steifigkeit verfügen. Die Gesamtanordnung der Festkörpergelenke verfügt über hohe Steifigkeitswerte in allen Freiheitsgraden, in denen keine Bewegungen ausgeführt werden sollen.

Gemäß eines nicht dargestellten Ausführungsbeispieles ist es auch möglich, das zweite Strukturteil 5 analog zum ersten Strukturteil zu unterteilen und mit einem Gelenk und Kompensationselementen zu versehen, so dass auch die Werkzeug-Spannebene E1 geneigt werden kann. Die Teilungsebene des ersten Strukturteiles 5 sollte dann in etwa in der Höhe der Teilungsebene 14 des zweiten Strukturteiles 13 angeordnet sein.

Insbesondere für die gleichzeitige Bearbeitung von zwei Werkstücken mit zwei Werkzeugen ist die Erfindung von Bedeutung, da mit dieser gewährleistet ist, dass die Bearbeitung der Werkstücke so erfolgt, dass diese mit im Wesentlichen gleichen Abmessungen im Rahmen der Toleranz gefertigt werden, da die Neigung der Werkstück-Aufspannebene zur Neigung der Werkzeugaufspannebene ständig kontrolliert und bei Bedarf neu ausgerichtet wird.

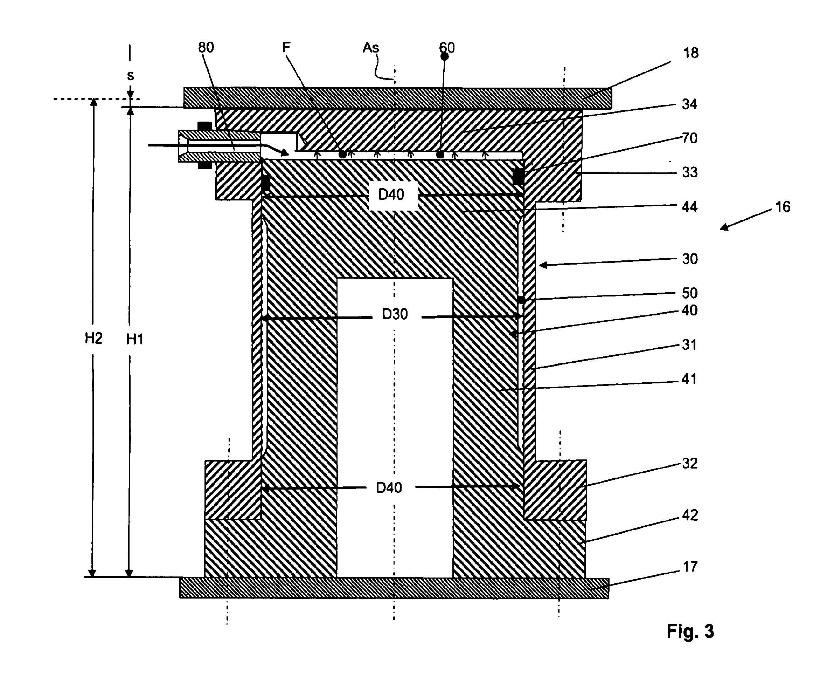

In Figur 3 ist eine Variante der Ausführung eines Kompensationselementes 16 dargestellt. Dieses weist einen im Wesentlichen rohrförmigen hohlen nach unten offenen Dehnungskörper 30 mit einer dünnen Wand 31 und einer in Richtung zum Stellweg s ausgerichteten Längsachse As auf. An seinem in der Darstellung unteren Ende weist der Dehnungskörpers 30 einen radial nach außen weisenden ersten Flansch 32 und an seinem gegenüberliegenden oberen Ende eine radial nach außen weisenden zweiten Flansch 33 und einen Boden 34 auf, so dass der Dehnungskörper einen im Wesentlichen bevorzugt rotationssymmetrischen napfförmigen Aufbau aufweist. Im dem Dehnungskörper 30 ist ein im Wesentlichen zylindrischer Stützkörper 40 angeordnet, der eine in Verhältnis zu der dünnen Wand 31 des Dehnungskörpers 30 eine insbesondere dickere und steifere Wand 41 aufweist und an seiner Unterseite ebenfalls einen radial nach außen weisenden Flansch 42 besitzt, auf dem der erste Flansch 32 des Dehnungskörpers 30 aufliegt. Der Stützkörper 40 weist ebenfalls an seiner dem Flansch 42 gegenüberliegenden Seite einen Boden 44 auf und ist insgesamt ebenfalls napfförmig ausgebildet.

Der Außendurchmesser D40 des Stützkörpers 40 zwischen seinem Flansch 42 und seinem Boden 44 und der Innendurchmesser D30 des Dehnungskörpers 30 sind aufeinander abgestimmt. Um eine einfache Montage zu gewährleisten und eine Reibung zu Verringern, besitz der Stützkörper 40 jedoch in seinem im Wesentlichen mittleren Bereich eine Durchmesserverringerung, so dass ein Spalt 50 gebildet wird.

Der Boden des Dehnungskörpers 34 und der Boden des Stützkörpers 44 sind voneinander beabstandet, so dass dazwischen ein Druckraum 60 gebildet wird. Dieser wird durch eine zwischen Innendurchmesser D30 des Dehnkörpers 30 und Außendurchmesser D40 des Stützkörpers 40 angeordnete Dichtung 70, die im Bereich des Bodens 44 des Dehnkörpers angeordnet ist, begrenzt. Zu dem Druckraum 60 führt eine Druckmittelzuführung 80, die hier durch den zweiten Flansch 33 des Dehnkörpers 30 reicht. An der Unterseite des Kompensationselementes 16 liegt eine untere Druckplatte 17 (bzw. ein Maschinenelement) und an der Oberseite eine obere Druckplatte 18 (bzw. ein zu verstellendes Element) an.

Der erste Flansch 32 des Dehnungskörpers 30 und der Flansch 42 des Stützkörpers 40 sind miteinander und mit der unteren Druckplatte 17 verbunden, der zweite Flansch 33 des Dehnungskörpers 30 ist mit der oberen Druckplatte 18 verbunden.

Im Ausgangszustand ist der Druckraum 60 vorzugsweise drucklos und das Kompensationselement weist eine Höhe H1 auf. Zur Realisierung eines Stellweges s wird über die Druckmittelzuführung 80 hier nicht dargestelltes Druckmittel in den Druckraum 60 geleitet und in diesem ein Druck aufgebaut der bewirkt, dass es zu einer Festkörperdeformation (im elastischen Bereich) der dünnen Wand 32 des Deformationselementes 30 auf Zug kommt und sich die dünne Wand 32 ausdehnt, wodurch die Höhe des Kompensationselementes um den Stellweg S auf die Höhe H2 vergrößert wird und damit durch die (in dem Druckraum 60) induzierte Kraft F das anliegende Element, hier die obere Druckplatte 18 anhebt, während das Maschinenelement, hier die untere Druckplatte 17, gestellfest bleibt.
Durch die ineinandergreifenden napfförmigen Bauteile in Form von Deformationselement 30 und Stützkörper 40 wird ein sehr einfacher und stabiler Aufbau eines Kompensationselementes 16 geschaffen, der die Steifigkeit der Maschine nur geringfügig beeinträchtigt. Es ist alternativ auch möglich (nicht dargestellt), den Stützkörper 40 aus Vollmaterial zu fertigen.

Gemäß einer weiteren Ausführungsvariante kann der Druckraum und somit das Dehnungselement auch ständig mit einem Druck im Druckraum bzw. einer Zugbelastung der Wand des Dehnungskörpers (in der Art einer Vorspannung) beaufschlagt werden. Bei Verringerung des Druckes wird eine Stellbewegung (gem. Figur 3 nach unten) und bei Erhöhung des Druckes eine dazu entgegen gesetzte Stellbewegung (gem. Figur 3 nach oben) durchgeführt.

Gemäß nicht dargestellter Varianten kann die Stellbewegung auch durch ein in seiner Länge verstellbares Element hervorgerufen, welches zwischen dem Dehnungskörper und dem Stützkörper (bevorzugt im Druckraum zwischen deren Böden) angeordnet ist. Dies kann beispielsweise ein piezoelektrisches Element sein, welches bei Anlegen einer Spannung seine Höhe verändert.

Das Kompensationselement kann neben dem Einsatz in Werkzeugmaschinen, insbesondere Fräsmaschinen auch zwischen beliebigen Maschinenelementen angeordnet werden, die hinsichtlich ihrer Lage zueinander verstellt werden sollen.

Durch die erfindungsgemäße Lösung wird die statische und dynamische Steifigkeit der Maschinenstruktur in allen Freiheitsgraden in nur sehr geringem Ausmass verringert.
Die Neigungsveränderung erfolgt bevorzugt automatisch über die Verstellung eines hydraulischen Druckes im Druckraum der Kompensationselemente.
Es ist möglich, die Neigung stufenlos und mit sehr hoher Genauigkeit (im µm Bereich)zu verändern, wobei die Verstellung des Druckes und somit der Neigung bevorzugt über die CNC Steuerung der Werkzeugmaschine(Fräsmaschine) erfolgt. Dazu wird die Veränderung der Neidung eines Strukturteiles der Maschine insbesondere über automatische Messzyklen mit einem Maschineninternen Messsystem, die über die CNC Steuerung initiiert werden und/oder über Thermosensoren die an geeigneten Stellen der Struktur angebracht sind.
Aus den ermittelten Messwerten wird die erforderliche Kompensation errechnet und über die CNC-Steuerung der Kompensationsvorgang ausgelöst und durchgeführt. Nach der erfolgten Kompensation der Neigung, der Z- und Y- Verschiebung kann bei Bedarf das Resultat gemessen und überprüft werden ob es den Vorgaben und Erwartungen entspricht.

## Patentansprüche

1. Werkzeugmaschine mit einer Einrichtung zur Lagekorrektur von wenigstens einem Element der Werkzeugmaschine, insbesondere einer Fräsmaschine (F), wobei zwischen einem Maschinenelement und dem hinsichtlich seiner Lage zu korrigierenden Element wenigstens ein Kompensationselement angeordnet ist, welches um einen Stellweg verstellbar ist und das durch Betätigung des Kompensationselementes um den Stellweg das Element um eine Schwenkachse (S) schwenkbar ist und wobei das Maschinenelement und das in seiner Lage zu korrigierende Element miteinander durch ein die Schwenkbewegung um die Schwenkachse (S) gewährleistendes Gelenk (16.1) gekoppelt sind, wobei
- an einem Maschinenelement in Form eines ersten Strukturteils (5) angeordnete Werkzeuge (10.1, 10.2) in einer zu einer Spindelachse (A) um 90° geneigten Werkzeug-Spannebene (E1) und
- Werkstücke (23.1, 23,2) in einer Werkstück-Spannebene (E2) an einem Maschinenelement in Form eines zweiten Strukturteils (13)ausgerichtet sind,
- wobei die Werkzeug-Spannebene (E1) und die Werkstück-Spannebene (E2) im Wesentlichen zueinander parallel ausgerichtet sind und
- die Werkzeugmaschine ein maschineninternes Messsystem aufweist, mit der eine Neigung oder Neigungsveränderung zwischen den Ebenen E1 und E2 bestimmbar ist und aus dem/den ermittelten Messwert/en die Stellgröße für den Stellweg eines Kompensationselementes (16) errechnet wird und
- eine über eine vorgegebene Toleranz auftretende Neigung zwischen Werkzeug-Spannebene (E1) und Werkstück-Spannebene (E2) durch eine Korrektur
• der Neigung des ersten Strukturteils (5) oder eines Bereiches des ersten Strukturteiles (5)
und/oder
• der Neigung des zweiten Strukturteils (13) oder eines Bereiches des zweiten Strukturteils (13) ausgleichbar ist.

2. Werkzeugmaschine nach Anspruch 1, **dadurch gekennzeichnet, dass** bei einer Werkzeugmaschine in Form einer Fräsmaschine (F), die eine offene insbesondere C-förmige Gestellstruktur, aufweist
- mit einem ersten Strukturteil (5), dem wenigstens eine Arbeitsspindel (8, 9) mit einer Spindelachse (A) und ein um die Spindelachse (A) antreibbares Werkzeug (10.1, 10.2) zugeordnet ist und
- mit mindestens einem zweiten Strukturteil (13), dem wenigstens eine Spannvorrichtung für wenigstens ein Werkstück (23.1, 23.2) zugeordnet ist,
wobei die Neigung zwischen dem ersten und zweiten Strukturteil (5, 13) dadurch veränderbar ist, dass das erste und/oder zweite Strukturteil (5, 13) das in seiner Lage veränderbare Element bildet/n oder aufweist/aufweisen und mittels eines oder mehrere Kompensationselemente (16) durch die um die Schwenkachse (S) induzierte Schwenkbewegung in ihrer Neigung relativ zueinander veränderbar ist/sind.

3. Werkzeugmaschine nach einem der Ansprüche 1 oder 2, **dadurch gekennzeichnet, dass** das hinsichtlich seiner Neigung verstellbare Element als ein erster Teil (13.1) des zweiten Strukturteils (13) ausgebildet ist, an dem sich die Spannvorrichtung für das Werkstück (23.1, 23.2) befindet, wobei ein zweiter Teil (13.2) des zweiten Strukturteils (13) das Maschinenelement bildet und der erste Teil (13.1) und der zweite Teil (13.2) des zweiten Strukturteils (13) durch das Gelenk (16.1) miteinander schwenkbar verbunden sind und zwischen dem ersten Teil (13.1) und dem zweiten Teil (13.2) des zweiten Strukturteils (13) mehrere Kompensationselemente (16) angeordnet sind.

4. Werkzeugmaschine nach einem der Ansprüche 1 bis 3, **dadurch gekennzeichnet, dass**
- das Gelenk (16.1) an der in Richtung zum ersten Strukturteil (5) angeordneten Seite des zweiten Strukturteils (13) angeordnet ist,
- als spielfreies, insbesondere aus Flachstahl bestehendes Festkörpergelenk ausgebildet ist und
- an dem ersten Teil (13.1) und dem zweiten Teil (13.2) des zweiten Strukturteils (13) befestigt ist.

5. Werkzeugmaschine nach einem der Ansprüche 1 bis 4, **dadurch gekennzeichnet, dass** zwei oder mehr Kompensationselemente (16) an der dem Gelenk (16.1) gegenüberliegenden Seite des zweiten Strukturteils (13) zwischen dessen ersten Teil (13.1) und zweiten Teil (13.2) angeordnet sind, wobei bevorzugt jeweils zwei Kompensationselemente (16) paarweise Anwendung finden und voneinander beabstandet zwei Kompensationselemente (16) oder zwei Paare von Kompensationselementen (16) zwischen dem ersten Teil (13.1) und dem zweiten Teil (13.2) des zweiten Strukturteils (13) angeordnet sind.

6. Werkzeugmaschine nach einem der Ansprüche 1 bis 5, **dadurch gekennzeichnet, dass** die Trennung zwischen dem ersten Teil (13.1) und dem zweiten Teil (13.2) des zweiten Strukturteils (13) im Wesentlichen horizontal ausgerichtet ist.

7. Werkzeugmaschine nach einem der Ansprüche 1 bis 6, **dadurch gekennzeichnet, dass** das erste Strukturteil (5) mehrere Arbeitsspindeln (10.1, 10.2) zur insbesondere gleichzeitigen Bearbeitung mehrerer am zweiten Strukturteil (13) aufgenommener, insbesondere baugleicher Werkstücke (23.1, 23.2) aufweist.

8. Werkzeugmaschine nach Anspruch 2, **dadurch gekennzeichnet, dass** das um einen Stellweg stellbare Kompensationselement (16) zwischen einem Maschinenelement und dem hinsichtlich seiner Lage zu korrigierenden Element angeordnet ist und das Kompensationselement (16) einen im Wesentlichen rohrförmigen Dehnungskörper (30) mit einer dünnen Wand (31), einer in Richtung zum Stellweg (s) ausgerichteten Längsachse (As) aufweist, dass innerhalb des Dehnungskörpers (30) ein Stützkörper (40) angeordnet ist und zwischen dem Stützkörper (40) und dem Dehnungskörper (30) ein Druckraum ausgebildet (60) ist, derart, dass bei einer im Druckraum (60) des Dehnungskörper wirkenden und sich verändernden Druckkraft (F) die dünne Wand (31) des Dehnungskörpers (30) in Stellrichtung um den Stellweges (s) in ihrer Länge veränderbar und dadurch das Element in seiner Lage/Neigung verstellbar ist.

9. Werkzeugmaschine nach Anspruch 8, **dadurch gekennzeichnet, dass** der Dehnungskörper (30) und der Stützkörper (40) an einem ersten Ende des Kompensationselementes (16) miteinander verbunden sind, dass an dem anderen zweiten Ende des Kompensationselementes (16) zwischen der Außenkontur des Stützkörpers (40) und der Innenkontur des Dehnungskörpers (30) der Druckraum (60) ausgebildet ist.

10. Werkzeugmaschine nach Anspruch 8 oder 9, **dadurch gekennzeichnet, dass** der Stützkörper (40) und der Dehnungskörper (30) an dem zweiten Ende des Kompensationselementes (16) einen Boden (34, 44) aufweisen, dass zwischen den Böden (34, 44) der Druckraum (60) ausgebildet ist, so dass sich bei einer im Druckraum (60) gegen beide Böden (34, 44) wirkende und sich verändernde Kraft die Gesamthöhe (H1) des Kompensationselementes (16) ändert.

11. Werkzeugmaschine nach einem der Ansprüche 8 bis 10, **dadurch gekennzeichnet, dass** die im Druckraum wirkende und die Stellbewegung erzeugende Kraft wahlweise
- durch die Druckbeaufschlagung des Druckraums, welcher durch eine Dichtung abgedichtet ist und eine Druckmittelzuführung aufweist, mittels eines Druckmediums oder
- durch ein im Druckraum angeordnetes bei Anlegen einer Spannung höhenverstellbares piezoelektrisches Element,
- durch ein im Druckraum angeordnetes mechanisch höhenverstellbares Element
induziert wird.

## Claims

1. A machine tool having a device for correcting the position of at least one element of the machine tool, especially a milling machine (F), wherein at least one compensating element is disposed between a machine element and the element of which the position is to be corrected, which is adjustable by an actuating distance and is pivotable about a pivoting axis (S) by actuation of the compensating element over the actuating distance, and wherein the machine element and the element of which the position is to be corrected are coupled to each other by a joint (16.1) which ensures the pivoting movement about a pivoting axis (S), wherein
- tools (10.1, 10.2) arranged on a machine element in form of a first structural part (5) are aligned in a tool clamping plane (E1) which is inclined by 90° relative to a spindle axis (A), and
- workpieces (23.1, 23.2) are aligned in a workpiece clamping plane (E2) on a machine element in form of a second structural part (13),
- wherein the tool clamping plane (E1) and the workpiece clamping plane (E2) are arranged substantially parallel with respect to each other, and
- the machine tool comprises a machine-internal measuring system with which an inclination or change in the inclination between the planes E1 and E2 can be determined and from said determined measured value or values the actuating quantity for the actuating distance of a compensation element (16) is calculated, and
- an inclination occurring beyond a predetermined tolerance between the tool clamping plane (E1) and workpiece clamping plane (E2) can be compensated by a correction
• in the inclination of the first structural part (5) or a region of the first structural part (5)
and/or
• in the inclination of the second structural part (13) or a region of the second structural part (13).

2. A machine tool according to claim 1, **characterized in that** in a machine tool in form of a milling machine (F), having an open, especially C-shaped frame structure, comprises
- one first structural part (5) associated with at least one work spindle (A) and a tool (10.1, 10.2) which can be driven about the spindle axis (A), and
- at least one second structural part (13) associated with at least one clamping apparatus for at least one workpiece (23.1, 23.2),
wherein the inclination between the first and the second structural part (5, 13) can be changed in such a way that the first and/or the second structural part (5, 13) form/forms or comprise/comprises the element of which the position is to be changed, and can be changed in their inclination relative to each other by means of one or several compensation elements (16) by the pivoting movement induced about a pivoting axis (S).

3. A machine tool according to one of the claims 1 or 2, **characterized in that** the element which can be adjusted with respect to its inclination is formed as a first part (13.1) of the second structural part (13) on which the clamping apparatus for the workpiece (23.1, 23.2) is disposed, wherein a second part (13.2) of the second structural part (13) forms the machine element, and the first part (13.1) and the second part (13.2) of the second structural part (30) are pivotably connected to each other by the joint (16.1), and several compensation elements (16) are arranged between the first part (13.1) and the second part (13.2) of the second structural part (13).

4. A machine tool according to one of the claims 1 to 3, **characterized in that**
- the joint (16.1) is arranged on the side of the second structural part (13) arranged in the direction towards the first structural part (5),
- is formed as a play-free solid joint especially consisting of flat steel, and
- is fixed to the first part (13.1) and the second part (13.2) of the second structural part (13).

5. A machine tool according to one of the claims 1 to 4, **characterized in that** two or more compensating elements (16) are arranged on the side of the second structural part (13) opposite of the joint (16.1) between its first part (13.1) and second part (13.2), wherein preferably two compensating elements (16) each are applied in pairs, and two compensating elements (16) or two pairs of compensating elements (16) are arranged spaced from each other between the first part (13.1) and the second part (13.2) of the second structural part (13).

6. A machine tool according to one of the claims 1 to 5, **characterized in that** the separation between the first part (13.1) and the second part (13.2) of the second structural part (13) is oriented substantially horizontally.

7. A machine tool according to one of the claims 1 to 6, **characterized in that** the first structural part (5) comprises several work spindles (10.1, 10.2) for the especially simultaneously machining of several especially identical workpieces (23.1, 23.2) accommodated on the second structural part (13).

8. A machine tool according to claim 2, **characterized in that** the compensating element (16) which is adjustable over an actuating distance is arranged between a machine element and the element that is to be corrected with respect to its position, and the compensating element (16) comprises a substantially tubular expansion body (30) with a thin wall (31), a longitudinal axis (As) oriented in the direction towards the actuating distance (s), that a support body (40) is arranged within the expansion body (30) and a pressure chamber (60) is formed between the support body (40) and the expansion body (30), such that in the case of a pressure force (F) varying and acting in the pressure chamber (60) of the expansion body the thin wall (31) of the expansion body (30) is variable in the actuating direction by the actuating distance (s) in its length and the element is thus adjustable in its position/inclination.

9. A machine tool according to claim 8, **characterized in that** the expansion body (30) and the support body (40) are connected to each other at a first end of the compensating element (16), that the pressure chamber (60) is formed at the other second end of the compensating element (16) between the outer contour of the support body (40) and the inner contour of the expansion body (30).

10. A machine tool according to claim 8 or 9, **characterized in that** the support body (40) and the expansion body (30) comprise a base (34, 44) at the second end of the compensating element (16), that the pressure chamber (60) is formed between the bases (34, 44), so that the total height (H1) of the compensating element (16) changes in the case of a varying force acting in the pressure chamber (60) on both bases (34, 44).

11. A machine tool according to one of the claims 8 to 10, **characterized in that** the force acting in the pressure chamber and generating the actuating movement is selectively induced
- by the pressurisation of the pressure chamber by means of a pressure medium, which pressure chamber is sealed by a seal and comprises a pressure medium feed, or
- by a piezoelectric element which is arranged in the pressure chamber and is height-adjustable by application of a voltage,
- by a mechanically height-adjustable element which is arranged in the pressure chamber.

## Revendications

1. Machine-outil avec un dispositif pour corriger la position d'au moins un élément de la machine-outil, en particulier d'une fraiseuse (F), dans laquelle est prévu entre un élément de la machine et l'élément dont la position doit être corrigée au moins un élément de compensation qui est ajustable sur une distance d'ajustement et l'élément peut pivoter avec la participation de l'élément de compensation sur la distance d'ajustement autour d'un axe de pivotement (S), et dans laquelle l'élément de machine et l'élément dont la position doit être corrigée sont couplés entre eux par une articulation (16.1) garantissant le mouvement pivotant autour de l'axe de pivotement (S),
- des outils (10.1, 10.2) disposés sur un élément de machine prenant la forme d'une première partie de structure (5) étant orientés dans un plan de serrage d'outil (E1) incliné de 90° par rapport à un axe de broche (A) et
- des pièces d'oeuvre (23.1, 23.2) étant orientées dans un plan de serrage de pièce (E2) sur un élément de machine prenant la forme d'une deuxième partie de structure (13),
- le plan de serrage d'outil (E1) et le plan de serrage de pièce (E2) étant pour l'essentiel parallèles l'un à l'autre et
- la machine-outil présentant un système de mesure interne avec lequel l'inclinaison ou le changement d'inclinaison entre les plans E1 et E2 peut être déterminé et la grandeur d'ajustement de la course d'ajustement d'un élément de compensation (16) peut être calculée à partir de la ou des valeurs mesurées, et
- une inclinaison dépassant une tolérance prédéterminée entre le plan de serrage d'outil (E1) et le plan de serrage de pièce (E2) pouvant être compensée par une correction
• de l'inclinaison de la première partie de structure (5) ou d'une zone de la première partie de structure (5)
et/ou
• de l'inclinaison de la deuxième partie de structure (13) ou d'une zone de la deuxième partie de structure (13).

2. Machine-outil selon la revendication 1, **caractérisée en ce que** sur une machine-outil de type fraiseuse (F) présentant une structure de bâti ouverte, en particulier en forme de C,
- avec une première partie de structure (5) à laquelle est associée au moins une broche de travail (8, 9) avec un axe de broche (A) et un outil (10.1, 10.2) pouvant être entraîné par l'axe de broche (A) et
- avec une deuxième partie de structure (13) à laquelle est associé au moins un mécanisme de serrage pour au moins une pièce d'oeuvre (23.1, 23.2),
l'inclinaison entre la première partie de structure et la deuxième (5, 13) peut être modifiée par le fait que la première partie de structure et/ou la deuxième (5, 13) forment ou présentent l'élément dont la position peut être modifiée et leur inclinaison l'une par rapport à l'autre peut être modifiée au moyen d'un ou plusieurs éléments de compensation (16) par un mouvement pivotant induit autour de l'axe de pivotement (S).

3. Machine-outil selon l'une des revendications 1 ou 2, **caractérisée en ce que** l'élément dont la position peut être modifiée est conformé comme une première partie (13.1) de la deuxième partie de structure (13) sur laquelle se trouve le mécanisme de serrage pour la pièce d'oeuvre (23.1, 23.2), une deuxième partie (13.2) de la deuxième partie de structure (13) formant l'élément de machine et la première partie (13.1) et la deuxième partie (13.2) de la deuxième partie de structure (13) étant reliées entre elles de façon pivotante par l'articulation (16.1) et plusieurs éléments de compensation (16) étant disposés entre la première partie (13.1) et la deuxième partie (13.2) de la deuxième partie de structure (13).

4. Machine-outil selon l'une des revendications 1 à 3, **caractérisée en ce que**
- l'articulation (16.1) est disposée sur des parties de la deuxième partie de structure (13) orientées en direction de la première partie de structure (5),
- est conformée comme une articulation monolithique sans jeu, composée en particulier d'acier plat, et
- est fixée sur la première partie (13.1) et la deuxième partie (13.2) de la deuxième partie de structure (13).

5. Machine-outil selon l'une des revendications 1 à 4, **caractérisée en ce que** deux ou plusieurs éléments de compensation (16) sont disposés sur le côté de la deuxième partie de structure (13) opposé à l'articulation (16.1) entre sa première partie (13.1) et sa deuxième partie (13.2), deux éléments de compensation (16) étant de préférence utilisés par paire à chaque fois et deux éléments de compensation (16) ou deux paires d'éléments de compensation (16) étant disposés à distance les uns des autres entre la première partie (13.1) et la deuxième partie (13.2) de la deuxième partie de structure (13).

6. Machine-outil selon l'une des revendications 1 à 5, **caractérisée en ce que** la séparation entre la première partie (13.1) et la deuxième partie (13.2) de la deuxième partie de structure (13) est orientée sensiblement à l'horizontale.

7. Machine-outil selon l'une des revendications 1 à 6, **caractérisée en ce que** la première partie de structure (5) présente plusieurs broches de travail (10.1, 10.2) pour l'usinage, en particulier simultané, de plusieurs pièces d'oeuvre (23.1, 23.2) de construction identique logées sur la deuxième partie de structure (13).

8. Machine-outil selon la revendication 2, **caractérisée en ce qu'**un élément de compensation (16) ajustable sur une distance d'ajustement est disposé entre un élément de machine et l'élément dont la position doit être corrigée et l'élément de compensation (16) présente un bloc d'allongement (30) sensiblement tubulaire avec une paroi mince (31) et un axe longitudinal (As) orienté dans la direction de la distance d'ajustement (s), **en ce qu'**un bloc d'appui (40) est disposé à l'intérieur du bloc d'allongement (30) et un espace de pression (60) est formé entre le bloc d'appui (40) et le bloc d'allongement (30), de telle sorte qu'en présence d'une force de pression (F) changeante agissant dans l'espace de pression (60), la paroi mince (31) du bloc d'allongement (30) peut changer de longueur dans le sens d'ajustement sur la distance d'ajustement (s) et la position/l'inclinaison de l'élément peut ainsi être ajustée.

9. Machine-outil selon la revendication 8, **caractérisée en ce que** le bloc d'allongement (30) et le bloc d'appui (40) sont reliés entre eux à une première extrémité de l'élément de compensation (16), **en ce que** l'espace de pression (60) est formé à l'autre deuxième extrémité de l'élément de compensation (16) entre le contour extérieur du bloc d'appui (40) et le contour intérieur du bloc d'allongement (30).

10. Machine-outil selon la revendication 8 ou 9, **caractérisée en ce que** le bloc d'appui (40) et la bloc d'allongement (30) présentent un fond (34, 44) à la deuxième extrémité de l'élément de compensation (16), **en ce que** l'espace de pression (60) est formé entre les fonds (34, 44) de sorte qu'en présence d'une force changeante agissant dans l'espace de pression (60) contre les deux fonds (34, 44), la hauteur totale (H1) de l'élément de compensation (16) se modifie.

11. Machine-outil selon l'une des revendications 8 à 10, **caractérisée en ce que** la force agissant dans l'espace de pression et produisant le mouvement d'ajustement est induite, au choix,
- par l'application de pression au moyen d'un fluide sous pression ans l'espace de pression, qui est rendu étanche par un joint d'étanchéité et présente une arrivée de fluide sous pression, ou
- par un élément piézoélectrique disposé dans l'espace de pression et dont la hauteur est ajustable par l'application d'une tension,
- par un élément mécanique réglable en hauteur disposé dans l'espace de pression.
